# EUROPEAN PATENT SPECIFICATION

(11) **EP 3 092 899 B1**
(45) Date of publication and mention of the grant of the patent: **14.11.2018**
(21) Application number: 15167621.0
(22) Date of filing: 13.05.2015
(51) Int. Cl.: A01N 37/36, A01N 57/20, A01N 39/04, A01N 25/30, A01P 13/00

(54) **SYNERGISTIC COMPOSITION CONTAINING HERBICIDE, ORGANIC ACID AND SURFACTANTS**
SYNERGISTISCHE ZUSAMMENSETZUNG ENTHALTEND EIN HERBIZID, EINE ORGANISCHE SÄURE UND EIN TENSID
COMPOSITION SYNERGÉTIQUE CONTENANT D'HERBICIDE, D'ACIDE ORGANIQUE ET DE SURFACTANT

(43) Date of publication of application: 16.11.2016
(73) Proprietor: multiBIND biotec GmbH, 51105 Köln (DE)
(72) Inventor: Lisowsky, Thomas, 40789 Monheim (DE); Esser, Karlheinz, 41199 Mönchengladbach (DE)
(74) Representative: Remus, Alvaro Johannes

(56) References cited:
- EP-A1- 0 577 914
- WO-A1-00/53018
- US-A1- 2002 049 140
- US-A1- 2002 123 430
- US-A1- 2002 160 916
- US-A1- 2003 224 939
- US-A1- 2004 097 372
- US-A1- 2014 128 264

## Description

### Background

The present invention relates to a herbicide composition comprising at least one herbicide agent selected from N-(phosphonomethyl)glycine and 2,4-dichlorophenoxyacetic acid, wherein the composition further comprises a mixture for enhancing at least one activity of the herbicide agent.

### Prior art

Contaminations by weed or unwanted plants in agricultural production cause severe problems and commercial losses [1 - 4]. In general agricultural production world-wide is under permanent pressure for higher yield. Therefore the use of herbicides is essential to secure yield and quality of agricultural products and to reduce economic losses. The constantly growing world population puts additional pressure on yield and quality of agricultural products as well as on the generation and synthesis of new herbicide agents. A major concern is also the biocompatibility of such herbicide agents and their impact on human health and the environment [3]. In addition existing classical herbicide agents are reduced or even completely blocked in their efficacy by the appearance of resistances or tolerance developed by adaptations of weeds and unwanted plants under the constant exposure to high amounts of herbicides [1 - 4].

Besides the synthesis and generation of completely new herbicide agents the enhancement of the efficacy of established herbicide products by suitable additives or adjuvant are fitting alternatives.

Conventional herbicide agents used in well-established herbicide products with a broad spectrum against weed and other unwanted plants are for example glyphosate (N-(phosphonomethyl)glycine) and 2,4-dichlorophenoxyacetic acid (2,4-D).

The listed conventional herbicide products are among the major herbicide products used world-wide against weed and other unwanted plants. The large quantities and the long time of usage of such conventional products bear environmental risks, human health risks as well as risks concerning the development of tolerance and resistance [1 - 4]. Therefore the search for synergistic substances that increase the efficacy of conventional herbicide agents and thereby allow the reduction of active ingredients and increase the biocompatibility is a major demand and still unsolved problem of current agriculture [3]. A higher efficacy would allow the substantial reduction of the amount of conventional herbicide agents necessary as active ingredients per hectare and the elimination of herbicide tolerant or resistant plants.

WO 00/53018 A1 discloses synergistic compositions in aqueous solutions of (a) glyphosate, acetic acid, citric acid and non-ionic surfactant, (b) glyphosate, acetic acid, citric acid and alkyl polyoxyethylene glycol ether, (c) alkyl polyoxyethylene glycol ether, (d) alkyl polyoxyethylene glycol ether and glyphosate, and (e) acetic acid, citric acid and alkyl polyoxyethylene glycol ether.

US 2002/123430 A1 relates to a method for enhancing glyphosate herbicidal efficacy with organic acids and an aqueous pesticidal composition comprising a water-soluble pesticide dissolved in an aqueous medium, a surfactant component and a compound which increases the cellular uptake of pesticide in a plant. The water-soluble pesticide is present in a concentration that is biologically effective when the composition is diluted in a suitable volume of water to form an enhanced application mixture and applied to the foliage of a susceptible plant. The surfactant component is provided in a concentration of 2 %.

EP 0 577 914 A1 concerns a glyphosate composition comprising a glyphosate herbicide and a surfactant component in the weight ratio of glyphosate to surfactant of 1:5 to 10:5, and a monocarboxylic fatty acid selected from saturated C8-C14 monocarboxylic fatty acids or salts thereof, in the weight ratio of glyphosate herbicide to fatty acid of 30:1 to 10:1. In particular, a surfactant blend in a concentration of 15.5 % is used in the composition.

US 2002/049140 A1 discloses a solid, hydro-soluble composition for horticultural and agricultural use in the destruction and/or control of unwanted vegetation with the herbicidal active agent glyphosate in the form of its salts, wherein the composition preferably has a glyphosate content of 18 to 22 wt.-% and about 10 wt.-% of a surfactant of one or more of ether sulphosuccinate, alkyl ether phosphate, ethoxylated fatty amine and/or ethoxylated fatty alcohol.

US 2003/224939 A1 describes compositions including a permeabilizing agent and an active component, wherein the permeabilizing agent acts as an adjuvant to the active component and is a chelating agent, cationic material, anionic material, or zwitterionic material, and includes polyphosphate salts. The active component can be a pesticide, herbicide, insecticide, fungicide, virucide, bacteriocide, and acaricide.

US 2002/160916 A1 discloses a composition comprising (a) a carboxylic acid or phosphorous containing acid which is not a glyphosate, (b) an amine containing surfactant, (c) at least one water soluble agricultural chemical with the proviso that the composition contains less than 3 percent by weight, preferably less than 1 percent by weight, of phosphate ester surfactant. The amount of the carboxylic acid used is preferably an eye irritating amount greater than 0.4 wt. %.

US 2014/128264 A1 relates to herbicidal compositions comprising an auxin herbicide, wherein the compositions exhibit reduced volatility and/or vapor drift upon application with respect to the auxin herbicide. The compositions comprise, in addition to the auxin herbicide, at least one monocarboxylic acid, or monocarboxylate thereof, in an amount sufficient to reduce the volatility of the auxin herbicide relative to an otherwise identical composition lacking the monocarboxylic acid, or monocarboxylate thereof.

US 2004/097372 A1 discloses solid concentrate compositions comprising a water-soluble herbicide in a concentration between 10 and 90% by weight of the composition, a surfactant component in a concentration up to 50% by weight of the composition, and a dicarboxylic acid in a concentration between 1 and 60% by weight of the composition. Dry formulations include between 33 and 70 wt. % of at least one water-soluble pesticide, as well as at least one enhancer component and at least one anionic surfactant, wherein the weight ratio of enhancer component to anionic surfactant is greater than 1.1:1. The dry formulation comprises at least one enhancer component and between 30-70 wt. % of at least one water-soluble pesticide. The formulation includes no more than 22 wt. % anionic surfactant.

### Summary of the invention

It is the object of the invention to overcome the current limitations and disadvantages of the prior art, to provide mixtures that significantly increase the efficacy and biocompatibility of conventional herbicide agents, and to develop herbicide compositions with reduced amount of herbicide agents that in addition also allow the elimination of already herbicide tolerant or resistant plants.

The object is met by a herbicide composition comprising at least one herbicide agent selected from N-(phosphonomethyl)-glycine (glyphosate) and 2,4-dichlorophenoxyacetic acid (2,4-D), the concentration of the herbicide agent being in the range from 0.1 % to 1 % (weight) in relation to the total weight of the composition, and a mixture for enhancing at least one activity of the herbicide agent, wherein said mixture comprises:
a) citric acid in concentrations from 0.05 % to 1 % (weight) in relation to the total weight of the composition,
b) at least one anionic tenside selected from sodium-lauryl-sulfate and sodium-olefine-sulfonate, the anionic tenside being included in concentrations from 0.05 % to 1 % (weight) in relation to the total weight of the composition.

Surprisingly, it was found that herbicide compositions comprising a conventional herbicide agent selected from N-(phosphonomethyl)-glycine and 2,4-dichlorophenoxyacetic acid as well as a mixture comprising citric acid and an anionic tenside selected from sodium-lauryl-sulfate and sodium-olefine-sulfonate as specified above exhibit significant higher activities than the substances alone or incomplete mixtures of them. Moreover, as said mixtures are highly biocompatible and the amount of herbicide agent in the composition can be significantly reduced, biocompatibility of the herbicide composition according to the invention is enhanced as well. Thus, one aspect of the invention is the use of a mixture comprising citric acid, and at least one anionic tenside selected from sodium-lauryl-sulfate and sodium-olefine-sulfonate for enhancing at least one activity of at least one herbicide agent selected from N-(phosphonomethyl)-glycine and 2,4-dichlorophenoxyacetic acid, wherein citric acid is included in concentrations from 0.05 % to 1 % (weight) in relation to the total weight of the composition, the anionic tenside is included in concentrations from 0.05 % to 1 % (weight) in relation to the total weight of the composition, and the herbicide agent is included in the range from 0.1 % to 1 % (weight) in relation to the total weight of the composition.
Combining conventional herbicide agents selected from N-(phosphonomethyl)-glycine and 2,4-dichlorophenoxyacetic acid with such mixtures enhances the general activity in a way that allows formulations with much lower concentrations of active ingredients from herbicide agents but that are still as effective as the much higher concentrations of the active ingredients in conventional formulations. Lower concentrations of active ingredients also have many other positive effects concerning for example biocompatibility, toxicity, technical applications and commercial aspects.
In particular, according to the invention highly efficient synergistic mixtures as defined above, when applied as an adjuvant or additive, are used to significantly increase the efficacy and biocompatibility of conventional herbicides selected from N-(phosphonomethyl)-glycine and 2,4-dichlorophenoxyacetic acid for treatment of plants. The synergistic mixture thereby allows significant reduction of active ingredients of conventional herbicide products. The higher efficacy of the synergistic mixture also allows to address the elimination of herbicide-resistant or herbicide-tolerant plants.

Accordingly, the invention concerns the use of the new synergistic adjuvant or additive formulations to generate new herbicide products containing conventional herbicide agents selected from N-(phosphonomethyl)-glycine and 2,4-dichlorophenoxyacetic acid for the treatment of all kind of weeds and unwanted plants as well as herbicide tolerant or resistant plants.
Advantageously, it is sufficient that the herbicide agent is included in the herbicide composition according to the invention in concentrations that are about 50% to 80% lower in concentrations than in the conventional product. Depending on the specific conventional herbicide product the preferred lower concentrations of the active ingredients in ready-to-use solutions are in the range from 0.1 % to 1 % (weight), in particular 0.25 % to 0.5 %, in relation to the total weight of the composition. Accordingly, lower amounts of herbicide agents in the synergistic herbicide composition according to the invention are sufficient to still achieve a significant inhibitory effect of plant growth and elimination of weeds or unwanted plants.
The anionic tenside may be included in final concentrations from 0.1 % to 1 % (weight), in particular 0.1 % to 0.25 % (weight), in relation to the total weight of the composition. In one exemplary embodiment, the citric acid can be included in concentrations from 0.1 % to 1 % (weight), in particular 0.1 % to 0.25 % (weight), in relation to the total volume of the ready-to-use composition.

The citric acid used in preparing herbicide compositions of the present invention is readily soluble or dissolved in or miscible with water or an aqueous based solvent.

The efficacy and biocompatibility of the herbicide composition according to the invention can be most notably increased if the anionic tenside and the citric acid are included at a ratio of approximately 1:1 (w/w).

For example, the herbicide composition according to the invention comprising at least one conventional herbicide selected from N-(phosphonomethyl)glycine and 2,4-dichlorophenoxyacetic acid, anionic tensides selected from sodium-lauryl-sulfate and sodium-olefine-sulfonate, and citric acid for effective herbicidal action according to the invention may include:
herbicide: 0.1% - 1.0%
tenside: 0.1 % -1.0 %
citric acid: 0.1 %- 1.0 %

In order to further enhance the activity of the herbicide according to the invention, the ratio of herbicide agent, citric acid and anionic tenside can be adjusted to about 1:1:1 (w/w/w).

The herbicide composition according to the invention may further comprise, for example, at least one additive, adjuvant, sticking or wetting agent and/or buffer substance, especially in order to render the composition suitable for specific applications.

Accordingly, the invention-related formulation may comprise additional common conventional additives and adjuvant like, for example, suitable sticking and wetting agents or buffer substances for defining a specific pH value.
If necessary, the pH value of the herbicide composition according to the invention can be adjusted to a pH between 2 and 5 by the addition of suitable acids or buffer systems.
The herbicide composition according to the invention is a ready-to-use formulation that can be used for all aspects of weed elimination.
The herbicide composition according to the invention can be provided, for example, as a 10xfold to 100xfold concentrate. For example, concentrated formulations of 10xfold to 100xfold may be used for production and shipment.
In general, herbicide application is achieved by spraying the composition according to the invention onto soil and/or plants, especially weeds. The applied methods are however variable and can be adjusted to the different tasks. According to one aspect of the invention, a method for treatment of soil and/or a surface of a plant comprises the following steps: applying the herbicide composition according to the invention to the soil and/or the surface of said plant.

The object is also met by the use of the synergistic additive or adjuvant composition as described above for enhancing at least one activity of at least one herbicide agent selected from N-(phosphonomethyl)glycine and 2,4-dichlorophenoxyacetic acid.
According to the invention, a use of the adjuvant or additive composition or mixture as described herein is provided, for enhancing at least one activity of at least one herbicide agent selected from N-(phosphonomethyl)glycine and 2,4-dichlorophenoxyacetic acid, so that efficacy and biocompatibility of the herbicide agent comprising said ingredients and said mixtures can be significantly increased.
According to one aspect of the invention, a method for producing a herbicide composition is provided, wherein the adjuvant or additive mixture as described above is added to at least one herbicide agent selected from N-(phosphonomethyl)glycine and 2,4-dichlorophenoxyacetic acid.
In the following, the invention is exemplarily illustrated in detail with reference to the trials and tables.

### Description of exemplary and preferred embodiments:

### Brief description of the trials

The activity of the synergistic mixtures to enhance the efficacy of herbicides was tested in vitro by leaf disc bioassays, in growth chamber trials with seedlings and in field trials with various different weed species.

The plants and leaves were visually assessed for damages by necrosis and chlorosis with the following scale for evaluation:

| | |
|---|---|
| 0: | no damage |
| +: | minor damages |
| ++: | severe damages on up to 50% of leave surface |
| +++: | damages on more than 50% of leave surface |
| ++++: | 100% damage |

### Leaf Disc Bioassay

5 mm discs were cut from leaves of plants from *Plantiago major, Sesamum indicum, Aegopodium potagraria* and *Chelidonium majus* using a paper punch (5 mm). 3 leaf discs of 5 mm Ø were placed in each well of 12-well microtiter plates. Each well containing 2 ml deionized H₂O, or solutions of various concentrations of glyphosate, 2,4-D or synergistic mixtures (M). The plates were incubated under continuous light at 20°C for the listed times. The leaf discs were visually assessed for chlorosis and necrosis at various times after treatment according to the scale for classification. The visual rating utilized a rating scale from 0 to ++++, where 0 = no damage by necrosis/chlorosis, and ++++ = total damage by chlorosis/necrosis (see Literature [1]).

### Growth chamber trials with seedlings

Seeds from *Sesamum indicum* or *Lepidum sativum* were placed on sterile filter paper of 4x4 cm wetted by sterile water. After a preincubation of 3 to 5 days at 20°C seedling plants of 2 - 3 cm height and with first green leaves were treated by one spray application using deionized H₂O (control) or solutions of various concentrations of glyphosate, 2,4-D or synergistic mixtures (M). The spray application was done until the leaves were dropping wet. The leaves of the seedlings were visually assessed for chlorosis and necrosis at various times after treatment according to the scale for classification. The visual rating utilized a rating scale from 0 to ++++, where 0 = no damage by necrosis/chlorosis, and ++++ = total damage by chlorosis/necrosis.

### Field trials

Field trials were done on defined plots of weed under mostly sunny conditions with 20°C to 25°C. The plot size was each with 1m x 5 m = 5m² or 1m x 10 m = 10m². The stage of annual weed plants was of 40 - 50 cm height. All plots were on the same field and side by side. There was only one spray application by knapsack sprayer. The documentation of trial plots was about every 7 days. The major weed species in the plots were mixtures of *Avena sterilis, Brachystachys, Malva spec., Phalaris, Raphanus equistiforme* and *Trifolium micranthum.* The weed plants were visually assessed for chlorosis and necrosis at various times after treatment according to the scale for classification. The visual rating utilized a rating scale from 0 to ++++, where 0 = no damage by necrosis/chlorosis, and ++++ = total damage by chlorosis/necrosis.

### Brief description of the tables

**Table 1** shows selected conventional herbicides tested for synergistic activities and their abbreviations used in the figures and legends.

**Table 2** shows inventive mixtures M2 and M4 (and comparative mixtures M1, M3, and M5-M6) and concentrations of ingredients that applied as additives or adjuvant for herbicides in the different tests resulted in synergistic enhancement of the herbicide activities of the tested conventional herbicide agents glyphosate and 2,4-D.
**Table 3** shows an example of the leaf disc bioassay with 5 mm discs cut from leaves of *Sesamum indicum.* 3 leaf discs of 5 mm Ø were placed in each well of 12-well microtiter plates. Each well containing 2 ml deionized H₂O, or solutions of various concentrations of glyphosate or synergistic mixture M2 with a 1:1 mixture of citric acid and SOS. The plates were incubated under continuous light at 20°C for the listed times. The leaf discs were visually assessed for chlorosis and necrosis according to the scale for classification and listed for hours after treatment (HAT). The visual rating utilized a rating scale from 0 to ++++, where 0 = no damage by necrosis/chlorosis, and ++++ = total damage by chlorosis/necrosis.

**Table 4** shows an example of the leaf disc bioassay with 5 mm discs cut from leaves of the common lawn weed *Plantiago major.* 3 leaf discs of 5 mm Ø were placed in each well of 12-well microtiter plates. Each well containing 2 ml deionized H₂O, or solutions of various concentrations of 2,4-D or synergistic mixture M4 with a 1:1 mixture of citric acid and SDS. The plates were incubated under continuous light at 20°C for the listed times. The leaf discs were visually assessed for chlorosis and necrosis according to the scale for classification and listed for hours after treatment (HAT). The visual rating utilized a rating scale from 0 to ++++, where 0 = no damage by necrosis/chlorosis, and ++++ = total damage by chlorosis/necrosis.

**Table 5** shows an example of growth chamber trials with seedlings from *Sesamum indicum.* Seeds placed on sterile filter paper of 4x4 cm were wetted by sterile water. After a preincubation of 3 to 5 days at 20°C seedling plants of 2 - 3 cm height and with first green leaves were treated by one spray application using deionized H₂O (control) or solutions of various concentrations of glyphosate or synergistic mixtures M2 with a 1:1 combination of citric acid and SOS. The spray application was done until the leaves were dropping wet. The leaves of the seedlings were visually assessed for chlorosis and necrosis according to the scale for classification and listed for days after treatment (DAT). The visual rating utilized a rating scale from 0 to ++++, where 0 = no damage by necrosis/chlorosis, and ++++ = total damage by chlorosis/necrosis.

**Table 6** shows an example of field trials on defined plots of weed under mostly sunny conditions with 20°C to 25°C. The plot size was each with 1m x 10 m = 10m². The stage of annual weed plants was of 40 - 50 cm height. All plots were on the same field and side by side. There was only one spray application by knapsack sprayer with various concentrations of glyphosate or synergistic mixture M2 with a 1:1 mixture of citric acid and SOS. The documentation of trial plots was about every 7 days after treatment (DAT) as listed. The major weed species in the plots were mixtures of *Avena sterilis, Brachystachys, Malva spec., Phalaris, Raphanus equistiforme* and *Trifolium micranthum.* The weed plants were visually assessed for chlorosis and necrosis according to the scale for classification. The visual rating utilized a rating scale from 0 to ++++, where 0 = no damage by necrosis/chlorosis, and ++++ = total damage by chlorosis/necrosis.

**Table 7** shows an example of field trials on defined plots of weed under mostly sunny conditions with 20°C to 25°C. The plot size was each with 1m x 5 m = 5m². The stage of annual weed plants was of 40 - 50 cm height. All plots were on the same field and side by side. There was only one spray application by knapsack sprayer with various concentrations of glyphosate or synergistic mixture M2 with a 1:1 mixture of citric acid and SOS. The documentation of trial plots was about every 7 days after treatment (DAT) as listed. The major weed species in the plots were mixtures of *Avena sterilis, Brachystachys, Malva spec., Phalaris, Raphanus equistiforme* and *Trifolium micranthum.* The weed plants were visually assessed for chlorosis and necrosis according to the scale for classification. The visual rating utilized a rating scale from 0 to ++++, where 0 = no damage by necrosis/chlorosis, and ++++ = total damage by chlorosis/necrosis.

**Table 1**

| Selected conventional herbicides tested for synergistic activities and their abbreviations used in the figures and legends. | |
|---|---|
| GLY | glyphosate (formulated product ROUNDUP, Monsanto, with 486 g/l isopropylamine salt of glyphosate) |
| 2,4-D | 2,4-dichlorophenoxyacetic acid (97% pure chemical grade substance from Sigma-Aldrich) |

**Table 2 (* - reference mixtures)**

| Mixtures: | M1* | M2 | M3* | M4 | M5* | M6* |
|---|---|---|---|---|---|---|
| Substances: | | | | | | |
| (tested with 0.1% - 1.0% in ready-to-use formulation) | | | | | | |
| citric acid | | + | | + | | |
| lactic acid | + | | | | + | |
| tartaric acid | | | + | | | + |
| Betaine (Undecylamidopropylbetaine) | + | | | | | |
| Maranil (Alcylbenzolsulfonate) | | | + | | | |
| SDS (Sodium-Lauryl-Sulfate) | | | | + | | |
| SEHS (Sodium-2-EthylHexyl-Sulfate) | | | | | + | |
| SOS (Sodium-Olefine-Sulfonate) | | + | | | | |
| Tween 20 (Polyoxyethylenesorbitane-monolaurate) | | | | | | + |

**Table 3**

| substance | application rate in % of volume | necrosis and chlorosis 33 HAT | necrosis and chlorosis 66 HAT |
|---|---|---|---|
| control | - | 0 | 0 |
| GLY | 0.5 | 0 | + |
| GLY | 0.25 | 0 | 0 |
| GLY | 0.1 | 0 | 0 |
| GLY+M2 | 0.5 + 0.5 | ++ | ++++ |
| GLY+M2 | 0.25 + 0.25 | ++ | ++++ |
| GLY+M2 | 0.1 + 0.1 | + | +++ |

**Table 4**

| substance | application rate in % of volume | necrosis and chlorosis 18 HAT | necrosis and chlorosis 36 HAT |
|---|---|---|---|
| control | - | 0 | 0 |
| 2,4-D | 0.5 | 0 | 0 |
| 2,4-D | 0.25 | 0 | 0 |
| 2,4-D | 0.1 | 0 | 0 |
| 2,4-D + M4 | 0.5 + 0.5 | ++ | ++++ |
| 2,4-D + M4 | 0.25 + 0.25 | ++ | ++++ |
| 2,4-D + M4 | 0.1 + 0.1 | + | ++ |

**Table 5**

| substance | application rate in % of volume | necrosis and chlorosis 8 DAT | necrosis and chlorosis 16 DAT |
|---|---|---|---|
| control | - | 0 | 0 |
| GLY | 1.0 | 0 | + |
| M2 | 0.5 | 0 | 0 |
| GLY+M2 | 1.0 + 0.5 | ++ | ++++ |

**Table 6**

| substance | application rate in % of spray volume | sprayvolume perha | necrosis and chlorosis 8 DAT | necrosisand chlorosis 14 DAT | necrosisand chlorosis 21 DAT | necrosis and chlorosis 30 DAT |
|---|---|---|---|---|---|---|
| control | - | - | 0 | 0 | 0 | 0 |
| M2 | 0.5 | 475 | 0 | 0 | 0 | 0 |
| GLY | 0.25 | 475 | 0 | 0 | 0 | 0 |
| GLY+M2 | 0.25 + 0.5 | 475 | ++ | ++++ | ++++ | ++++ |
| GLY | 0.5 | 475 | + | ++ | +++ | ++++ |
| GLY+M2 | 0.25 + 0.5 | 475 | ++ | ++++ | ++++ | ++++ |
| GLY | 1.0 | 475 | ++ | ++++ | ++++ | ++++ |
| GLY+M2 | 1.0+0.5 | 475 | ++ | ++++ | ++++ | ++++ |

**Table 7**

| Substance | application rate in % of spray volume | spray volume per ha | necrosis and chlorosis 7 DAT | necrosis and chlorosis 15 DAT | necrosisand chlorosis 21 DAT | necrosisand chlorosis 28 DAT |
|---|---|---|---|---|---|---|
| control | - | - | 0 | 0 | 0 | 0 |
| M2 | 0.25 | 480 | 0 | 0 | 0 | 0 |
| M2 | 0.5 | 480 | 0 | 0 | 0 | 0 |
| GLY | 0.25 | 480 | 0 | 0 | 0 | 0 |
| GLY+M2 | 0.25 + 0.25 | 480 | ++ | +++ | ++++ | ++++ |
| GLY+M2 | 0.25 + 0.5 | 480 | ++ | +++ | ++++ | ++++ |
| GLY | 0.5 | 480 | + | ++ | +++ | +++ |

### Examples

**Table 2** shows inventive mixtures M2 and M4 (and comparative mixtures M1, M3, and M5-M6) and concentrations of ingredients that applied as additives or adjuvant for herbicides in the different tests resulted in synergistic enhancement of the herbicide activities of the tested conventional herbicide agents glyphosate and 2,4-D. The preferred ratio of organic acid and detergent was 1:1 (w/w) and the preferred concentration with a general good enhancement of herbicide activity was 0.1% to 0.25%. At a concentration of 0.1% to 0.25% glyphosate or 2,4-D alone did not show any significant damage of plant leaves.
**Table 3** shows an example of the leaf disc bioassay with 5 mm discs cut from leaves of *Sesamum indicum.* Glyphosate alone or the mixture M2 alone do not show efficient damage of the leaf discs under these conditions. A clear synergistic effect is observed for the combination of glyphosate and the mixture M2 with a faster action of the herbicide at also lower concentrations up to 0.1%.
**Table 4** shows an example of the leaf disc bioassay with 5 mm discs cut from leaves of the common lawn weed *Plantiago major.* 2,4-D alone or the mixture M4 alone do not show efficient damage of the leaf discs under these conditions. A clear synergistic effect is observed for the combination of 2,4-D and the mixture M4 with a faster action of the herbicide at also lower concentrations of up to 0.1%.
**Table 5** shows an example of growth chamber trials with seedlings from *Sesamum indicum.* Glyphosate alone or the mixture M2 alone do not show efficient damage of the seedlings under these conditions. A clear synergistic effect is observed for the combination of glyphosate and the mixture M2 with a faster action of the herbicide.

**Table 6** shows an example of field trials on defined plots. Glyphosate at 0.25% or the synergistic mixture M2 with a 1:1 mixture of citric acid and SOS alone do not show efficient elimination of weed plants. A combination of 0.25% glyphosate with 0.5% of mixture M2 results in a clear synergistic effect by faster elimination of all major weed species in the plots like *Avena sterilis, Brachystachys, Malva spec., Phalaris, Raphanus equistiforme* and *Trifolium micranthum.*

**Table 7** shows an example of field trials on defined plots. Glyphosate at 0.25% or the synergistic mixture M2 with a 1:1 mixture of citric acid and SOS alone do not show efficient elimination of weed plants. A combination of 0.25% glyphosate with 0.25% of mixture M2 results in a clear synergistic effect by faster elimination of all major weed species in the plots like *Avena sterilis, Brachystachys, Malva spec., Phalaris, Raphanus equistiforme* and *Trifolium micranthum.*

### References

[1] V. K. Nandula, K. N. Reddy, S. O. Duke, D. H. Poston (2005) Glyphosate-Resistant Weeds: Current Status and Future Outlook. Outlook on Pest Management, 183 -187.
[2] N. D. Teaster, R. E. Hoagland (2013) Varying Tolerance to Glyphosate in a Population of Palmer Amaranth with Low EPSPS Gene Copy Number. American Journal of Plant Sciences, Vol. 4, 2400-2408. http://dx.doi.org/10.4236/ajps.2013.412297
[3] A. Samsel, S. Seneff (2013) Glyphosate, pathways to modern diseases II: Celiac sprue and gluten intolerance. Interdiscip Toxicol. Vol. 6(4): 159-184.
[4] R. E. Hoagland, R. H. Jordan and N. D. Teaster (2013) Bioassay and Characterization of Several Palmer Amaranth (Amaranthus palmeri) Biotypes with Varying Tolerances to Glyphosate. American Journal of Plant Sciences, Vol. 4, No. 5, 1029-1037. http://dx.doi.org/10.4236/ajps.2013.45127

## Claims

1. Herbicide composition comprising at least one herbicide agent selected from N-(phosphonomethyl)glycine and 2,4-dichlorophenoxyacetic acid, the concentration of the herbicide agent being in the range from 0.1 % to 1 % (weight) in relation to the total weight of the composition, and a mixture for enhancing at least one activity of the herbicide agent, wherein said mixture comprises:
a) citric acid in concentrations from 0.05 % to 1 % (weight) in relation to the total weight of the composition,
b) at least one anionic tenside selected from sodium-lauryl-sulfate and sodium-olefine-sulfonate, the anionic tenside being included in concentrations from 0.05 % to 1 % (weight) in relation to the total weight of the composition.

2. Herbicide composition according to claim 1, **characterized in that** the concentration of the herbicide agent is in the range from 0.25 % to 0.5 % (weight) in relation to the total weight of the composition.

3. Herbicide composition according to claim 1 or 2, **characterized in that** the anionic tenside is included in concentrations from 0.1 % to 1 % (weight), in particular 0.1 % to 0.25 % (weight), in relation to the total weight of the composition.

4. Herbicide composition according to any one of the claims 1 to 3, **characterized in that** the citric acid is included in concentrations from 0.1 % to 1 % (weight), in particular 0.1 % to 0.25 % (weight), in relation to the total weight of the composition.

5. Herbicide composition according to any one of the claims 1 to 4, **characterized in that** the anionic tenside and the citric acid are included at a ratio of 1:1 (w/w).

6. Herbicide composition according to any one of the claims 1 to 5, **characterized in that** the herbicide agent, the citric acid and the anionic tenside are included at a ratio of 1:1:1 (w/w/w).

7. Herbicide composition according to any one of the claims 1 to 6, further comprising at least one additive, adjuvant, sticking or wetting agent and/or buffer substance.

8. Method for treatment of soil and/or a surface of a plant, said method comprising the following steps: applying the herbicide composition according to any one of claims 1 to 7 to the soil and/or the surface of said plant.

9. Use of the mixture comprising: a) citric acid and
b) at least one anionic tenside selected from sodium-lauryl-sulfate and sodium-olefine-sulfonate for enhancing the activity of at least one herbicide agent selected from N-(phosphonomethyl)glycine and 2,4-dichlorophenoxyacetic acid in the composition according to any of claims 1 to 7.

10. Method for producing the herbicide composition according to any of claims 1 to 7, **characterized by** adding the mixture comprising:
a)citric acid and b) at least one anionic tenside selected from sodium-lauryl-sulfate and sodium-olefine-sulfonate to at least one herbicide agent selected from N-(phosphonomethyl)glycine and 2,4-dichlorophenoxyacetic acid.

## Patentansprüche

1. Herbizid-Zusammensetzung, welche mindestens ein Herbizid-Mittel, das gewählt ist aus N-(Phosphonomethyl)Glycin und 2,4-Dichlorophenoxyessigsäure, wobei die Konzentration des Herbizid-Mittels im Bereich von 0,1 Gew.-% bis 1 Gew.-% im Verhältnis zum Gesamtgewicht der Zusammensetzung liegt, und eine Mischung zum Steigern mindestens einer Aktivität des Herbizid-Mittels umfasst, wobei diese Mischung umfasst:
a) Zitronensäure in Konzentrationen von 0,05 Gew.-% bis 1 Gew.-% im Verhältnis zum Gesamtgewicht der Zusammensetzung,
b) mindestens ein anionisches Tensid, das gewählt ist aus Natrium-Lauryl-Sulfat und Natrium-Olefin-Sulfonat, wobei das anionische Tensid in Konzentrationen von 0,05 Gew.-% bis 1 Gew.-% im Verhältnis zum Gesamtgewicht der Zusammensetzung enthalten ist.

2. Herbizid-Zusammensetzung nach Anspruch 1, **dadurch gekennzeichnet, dass** die Konzentration des Herbizid-Mittels im Bereich von 0,25 Gew.-% bis 0,5 Gew.-% im Verhältnis zum Gesamtgewicht der Zusammensetzung liegt.

3. Herbizid-Zusammensetzung nach Anspruch 1 oder 2, **dadurch gekennzeichnet, dass** das anionische Tensid in Konzentrationen von 0,1 Gew.-% bis 1 Gew.-%, insbesondere 0,1 Gew.-% bis 0,25 Gew.-%, im Verhältnis zum Gesamtgewicht der Zusammensetzung enthalten ist.

4. Herbizid-Zusammensetzung nach einem der Ansprüche 1 bis 3, **dadurch gekennzeichnet, dass** die Zitronensäure in Konzentrationen von 0,1 Gew.-% bis 1 Gew.-%, insbesondere 0,1 Gew.-% bis 0,25 Gew.-%, im Verhältnis zum Gesamtgewicht der Zusammensetzung enthalten ist.

5. Herbizid-Zusammensetzung nach einem der Ansprüche 1 bis 4, **dadurch gekennzeichnet, dass** das anionische Tensid und die Zitronensäure in einem Verhältnis von 1:1 (Gewichtsprozent) enthalten sind.

6. Herbizid-Zusammensetzung nach einem der Ansprüche 1 bis 5, **dadurch gekennzeichnet, dass** das Herbizid-Mittel, die Zitronensäure und das anionische Tensid in einem Verhältnis von 1:1:1 (Gewichtsprozent) enthalten sind.

7. Herbizid-Zusammensetzung nach einem der Ansprüche 1 bis 6, welche ferner mindestens ein Additiv, Hilfsstoff, Haft- oder Benetzungsmittel und/oder Puffersubstanz umfasst.

8. Verfahren zur Behandlung von Erde oder einer Oberfläche einer Pflanze, welches die folgenden Schritte umfasst: Anwenden der Herbizid-Zusammensetzung nach einem der Ansprüche auf 1 bis 7 auf die Erde und/oder die Oberfläche der Pflanze.

9. Verwendung der Mischung, die umfasst a) Zitronensäure und b) mindestens ein anionisches Tensid, das gewählt ist aus Natrium-Lauryl-Sulfat und Natrium-Olefin-Sulfonat, zum Steigern der Aktivität mindestens eines Herbizid-Mittels, das gewählt ist aus N-(Phosphonomethyl)Glycin und 2,4-Dichlorophenoxyessigsäure, in der Zusammensetzung nach einem der Ansprüche 1 bis 7.

10. Verfahren zur Herstellung der Herbizid-Zusammensetzung nach einem der Ansprüche 1 bis 7, **gekennzeichnet durch** Zugeben der Mischung, die umfasst a) Zitronensäure und b) mindestens ein anionisches Tensid, das gewählt ist aus Natrium-Lauryl-Sulfat und Natrium-Olefin-Sulfonat, zu mindestens einem Herbizid-Mittel, das gewählt ist aus N-(Phosphonomethyl)Glycin und 2,4-Dichlorophenoxyessigsäure.

## Revendications

1. Composition herbicide comprenant au moins un agent herbicide sélectionné parmi la N-(phosphonométhyl)glycine et l'acide 2,4-dichlorophénoxyacétique, la concentration en agent herbicide étant comprise dans la plage allant de 0,1 % à 1 % (en poids) par rapport au poids total de la composition, et un mélange pour renforcer au moins une activité de l'agent herbicide, dans laquelle ledit mélange comprend :
a) de l'acide citrique à des concentrations de 0,05 % à 1% (en poids) par rapport au poids total de la composition,
b) au moins un agent tensioactif anionique sélectionné parmi le laurylsulfate de sodium et l'oléfine-sulfonate de sodium, l'agent tensioactif anionique étant inclus à des concentrations de 0,05 % à 1 % (en poids) par rapport au poids total de la composition.

2. Composition herbicide selon la revendication 1, **caractérisée en ce que** la concentration en agent herbicide est comprise dans la plage allant de 0,25 % à 0,5 % (en poids) par rapport au poids total de la composition.

3. Composition herbicide selon la revendication 1 ou 2, **caractérisée en ce que** l'agent tensioactif anionique est inclus à des concentrations de 0,1 % à 1 % (en poids), en particulier de 0,1 % à 0,25 % (en poids), par rapport au poids total de la composition.

4. Composition herbicide selon l'une quelconque des revendications 1 à 3, **caractérisée en ce que** l'acide citrique est inclus à des concentrations de 0,1 % à 1 % (en poids), en particulier de 0,1 % à 0,25 % (en poids), par rapport au poids total de la composition.

5. Composition herbicide selon l'une quelconque des revendications 1 à 4, **caractérisée en ce que** l'agent tensioactif anionique et l'acide citrique sont inclus selon un rapport de 1:1 (p/p).

6. Composition herbicide selon l'une quelconque des revendications 1 à 5, **caractérisée en ce que** l'agent herbicide, l'acide citrique et l'agent tensioactif anionique sont inclus selon un rapport de 1:1:1 (p/p/p).

7. Composition herbicide selon l'une quelconque des revendications 1 à 6, comprenant en outre au moins un additif, un adjuvant, un agent collant ou mouillant et/ou une substance tampon.

8. Procédé de traitement d'un sol et/ou d'une surface d'une plante, ledit procédé comprenant les étapes suivantes consistant à : appliquer la composition herbicide selon l'une quelconque des revendications 1 à 7 sur le sol et/ou la surface de ladite plante.

9. Utilisation du mélange comprenant : a) de l'acide citrique et b) au moins un agent tensioactif anionique sélectionné parmi le laurylsulfate de sodium et l'oléfine-sulfonate de sodium pour renforcer l'activité d'au moins un agent herbicide sélectionné parmi la N-(phosphonométhyl)glycine et l'acide 2,4-dichlorophénoxyacétique dans la composition selon l'une quelconque des revendications 1 à 7.

10. Procédé de production de la composition herbicide selon l'une quelconque des revendications 1 à 7, **caractérisé par** l'ajout du mélange comprenant : a) de l'acide citrique et b) au moins un tensioactif anionique sélectionné parmi le laurylsulfate de sodium et l'oléfine-sulfonate de sodium à au moins un agent herbicide sélectionné parmi la N-(phosphonométhyl)glycine et l'acide 2,4-dichlorophénoxyacétique.
